# EUROPÄISCHE PATENTSCHRIFT

(11) **EP 3 483 077 B1**
(45) Veröffentlichungstag und Bekanntmachung des Hinweises auf die Patenterteilung: **01.11.2023**
(21) Anmeldenummer: 18205088.0
(22) Anmeldetag: 08.11.2018
(51) Int. Cl.: B65B 25/06, B65B 47/00, B25J 9/00, B25J 11/00, G05B 19/418

(54) **VERFAHREN ZUM POSITIONIEREN VON LEBENSMITTELPRODUKTEN**
METHOD FOR POSITIONING FOOD PRODUCTS
PROCÉDÉ DE POSITIONNEMENT DES DENRÉES ALIMENTAIRES

(30) Priorität: 10.11.2017 DE 102017126412
(43) Veröffentlichungstag der Anmeldung: 15.05.2019
(73) Patentinhaber: Weber Maschinenbau GmbH Breidenbach, 35236 Breidenbach (DE)
(72) Erfinder: Nichau, Marco, 57334 Bad Laasphe (DE)
(74) Vertreter: Manitz Finsterwald Patent- und Rechtsanwaltspartnerschaft mbB

(56) Entgegenhaltungen:
- EP-A1- 1 717 150
- DE-A1- 19 820 537
- DE-A1-102016 108 003

## Beschreibung

Die vorliegende Erfindung betrifft ein Verfahren zum Positionieren zumindest eines Lebensmittelprodukts in oder auf einer Ablageeinheit, insbesondere einem Teil einer Verpackung, mit einer getaktet bewegbaren Fördervorrichtung zur Bewegung der Ablageeinheit und mit zumindest einem Roboter, der dazu ausgebildet ist, das Lebensmittelprodukt an einer Aufnahmeposition aufzunehmen, zu bewegen und in oder auf der Ablageeinheit abzulegen.

Ferner betrifft die vorliegende Erfindung eine Verpackungsvorrichtung für Lebensmittelprodukte mit einer Fördervorrichtung zur Bewegung einer Ablageeinheit und mit einem Roboter zur Aufnahme, Bewegung und Ablage zumindest einer Lebensmittelportion in oder auf der Ablageeinheit.

Zur bequemeren direkten Verwendbarkeit durch einen Verbraucher ist es verbreitet, Lebensmittelprodukte in aufgeschnittener Form verpackt zu vertreiben. Hierzu sind grundsätzlich Systeme bekannt, die zumindest eine Aufschneidevorrichtung sowie zumindest eine Verpackungsvorrichtung umfassen, um die Lebensmittelprodukte weitgehend automatisiert aufzuschneiden bzw. zu verpacken. Insbesondere wenn es sich bei der Aufschneidevorrichtung um einen Hochgeschwindigkeitsslicer handelt, können dabei Prozessgeschwindigkeiten von über 1000 Schnitten pro Minute erreicht werden. Durch die parallele Verwendung mehrerer Aufschneidevorrichtungen kann der Durchsatz sogar noch gesteigert werden. Diesen Durchsatz gilt es im Anschluss zu verpacken.

In der Regel werden von einem jeweiligen Lebensmittelprodukt abgetrennte Scheiben nicht einzeln verpackt, sondern in Portionen. Eine Portion umfasst zumindest ein Stück oder eine Scheibe eines Produkts. Es können auch Stücke und/oder Scheiben verschiedener Produkte kombiniert werden, um eine Portion zu bilden.

Des Weiteren kann vorgegeben sein, in welcher räumlichen Anordnung zueinander die jeweiligen Portionen angeordnet und/oder auf welche Weise sie geschichtet sein sollen. Dadurch ist es möglich Portionen zu bilden, deren Stücke oder Scheiben mit oder ohne Trennblatt, einlagig oder mehrlagig, glatt, gefaltet, gewellt oder gekräuselt, linear, rund, oval oder in einer sonstigen Form gestapelt oder geschindelt sind.

Nach dem Bilden solcher Portionen können diese der Verpackungsvorrichtung zugeführt werden, wo sie dann verpackt werden. Grundsätzlich können die Portionen aber auch (teilweise oder vollständig) direkt in der Verpackung gebildet werden.

Zum Aufnehmen und Bewegen von Lebensmittelprodukten und zum Bilden solcher Portionen, wie zum Beispiel Wurst, Schinken, Käse, Fleisch, Teig- und Backwaren oder dergleichen, ist es üblich, Roboter mit Portionsgreifern, zu verwenden. Derartige Maschinen sind beispielsweise sogenannte "Picker", welche auch "Pick and Place-Roboter" oder "Delta- Roboter" genannt werden. Es können aber auch andere Robotertypen zum Einsatz gelangen.

Gemäß dem Stand der Technik ist es üblich, dass die Verpackungsvorrichtung mit einem getakteten Vorzug einer Folienbahn arbeitet. Dieser Vorzug - erzeugt durch eine geeignete Fördervorrichtung - hängt unter anderem vom verwendeten Verpackungsformat, z.B. zweidimensionalen Matrizen unterschiedlicher Ordnungen, sowie von den zum Einsatz kommenden Tiefzieh- und Versiegelungsvorrichtungen ab, die der Verpackungsvorrichtung vor- bzw. nachgelagert sind.

Bei herkömmlichen Verpackungsmaschinen werden beispielsweise mittels einer Tiefziehstation Mulden in einer Kunststofffolie erzeugt. Die mit Mulden versehene Folienbahn wird dann vom Bereich der Tiefziehvorrichtung in einen Arbeitsbereich eines Roboters gezogen (Einlegestation). Dort steht sie still bis der Roboter mit dem Einlegen der Portionen fertig ist. Anschließend wird die Folienbahn in den Bereich der Versiegelungsvorrichtung gezogen. Eine Ruhephase (Einlegen der Portionen) und eine Bewegungsphase (Vorzug) bilden einen Takt der Verpackungsmaschine. Die Länge eines Takts wird somit grundsätzlich durch die Dauer des Tiefziehens der Mulden, die Dauer des Einlegens der Portionen in die Mulden und/oder die Dauer des Versiegelungsprozesses vorgegeben. In den meisten Fallkonstellationen bestimmt das Einlegen der Portionen die Dauer der Ruhephase eines Takts. Erst wenn das Einlegen aller Mulden abgeschlossen wurde, kann nämlich der nächste Takt starten. Auch das Formen von Mulden ist ein bedeutender Zeitfaktor.

Die EP 1 717 150 A1 offenbart ein Verfahren zum Positionieren zumindest eines Lebensmittelprodukts in eine Verpackung, mit einer kontinuierlich bewegbaren Fördervorrichtung zur kontinuierlichen Bewegung der Verpackung und mit zumindest einem Roboter, der dazu ausgebildet ist, das Lebensmittelprodukt an einer Aufnahmeposition aufzunehmen, zu bewegen und in der Verpackung abzulegen. Um Zwischenpuffer und andere aufwendige Maßnahmen zu vermeiden, arbeiten Tiefziehstation, Füllstation und Siegelstation der offenbarten Verpackungsmaschine hintereinander an ein und derselben quasi-endlosen, sich permanent vorwärtsbewegenden Behälter-Folienbahn. Dadurch, dass mittels Tiefziehen hergestellte Kunststoffbehälter an der laufenden Folienbahn hergestellt und anschließend befüllt und verschlossen werden und erst danach aus der Folienbahn herausgelöst werden, soll angeblich eine kompakte Abfüll- und Verpackungsanlage mit geringstmöglichen Aufwand, insbesondere unter Verzicht von dazwischen angeordneten Puffern und Handling-Einrichtungen für vereinzelte Behälter, möglich sein.

Es ist die Aufgabe der Erfindung, ein Verfahren zum Positionieren von Lebensmittelprodukten auf einer Ablageeinheit, insbesondere einem Teil einer Verpackung, bereitzustellen, dass die Leistung der Verpackungsvorrichtung steigert, ohne dass hierfür aufwendige konstruktive Maßnahmen erforderlich sind.

Die Lösung dieser Aufgabe erfolgt durch ein Verfahren mit den Merkmalen des Anspruchs 1.

Erfindungsgemäß wurde nämlich erkannt, dass der Vorzug der Folienbahn selbst eine unproduktive Wartezeit darstellt und direkt zu einer Begrenzung der Leistung der Verpackungsvorrichtung beiträgt. Besonders bei großen Formaten und längeren Vorzugszeiten der Folienbahn macht sich diese Wartezeit negativ bemerkbar.

Erfindungsgemäß umfasst in diesem Verfahren jeder Takt der Bewegung der Fördervorrichtung zumindest eine Bewegungsphase und zumindest eine Ruhephase. Der Roboter nimmt zumindest eine Portion des Lebensmittelprodukts auf und legt zumindest eine Portion während der Bewegungsphase in oder auf der Ablageeinheit ab. Der Roboter wartet also nicht mehr einen Vorzug der Ablageeinheit durch die Fördervorrichtung ab, um die Portionen der Lebensmittelprodukte abzulegen, sondern erledigt dies bereits teilweise während der Bewegung der Fördervorrichtung.

Dadurch können Wartezeiten des Roboters, während denen er stillsteht, vermieden und somit die Leistung der Verpackungsvorrichtung gesteigert werden. Die Gesamtarbeitszeit, die der Roboter benötigt, um alle Portionen abzulegen, kann dadurch verkürzt werden und es können somit in der gleichen Zeit mehr Portionen verpackt werden als es im Stand der Technik der Fall ist.

Mit anderen Worten wird die vormals ungenutzte Zeit während eines Vorzugs der Folienbahn produktiv zum Einlegen von Portionen genutzt. Dadurch verringert sich auch die Dauer des Einlegens "in Ruhe". Gerade wenn das Einlegen der Portionen der bestimmende Faktor für die Taktdauer ist, geht das erfindungsgemäße Verfahren mit einer erheblichen Produktivitätssteigerung einher.

Weiterbildungen der Erfindung sind auch den abhängigen Ansprüchen, der Beschreibung sowie den beigefügten Zeichnungen zu entnehmen.

Gemäß einer Ausführungsform werden zumindest eine charakteristische Eigenschaft des Takts der Fördervorrichtung und/oder zumindest eine charakteristische Eigenschaft der Bewegung der Ablageeinheit und/oder des Roboters erfasst und/oder gespeichert. Solche charakteristischen Eigenschaften können beispielsweise das Geschwindigkeits- oder Beschleunigungsprofil, die Länge oder auch die Dauer eines Takts bzw. der Bewegung der Ablageeinheit bzw. des Roboters und/oder eines Greifers des Roboters sein.

Insbesondere wird zumindest eine charakteristische Eigenschaft des Takts der Fördervorrichtung in Abhängigkeit von der erfassten und/oder gespeicherten Eigenschaft des vorangegangenen Takts bzw. der Bewegung der Ablageeinheit während des vorangegangenen Takts angepasst. Zusätzlich oder alternativ kann zumindest eine charakteristische Eigenschaft der Bewegung des Roboters (dazu gehören nicht nur die Parameter der Bewegung zwischen Aufnahme und Ablage der Portionen - z.B. ein Beschleunigungsprofil - , sondern u.a. auch Parameter, die das Aufnehmen und das Ablegen selbst steuern oder beeinflussen) in Abhängigkeit von der erfassten und/oder gespeicherten Eigenschaft des vorangegangenen Takts bzw. der Bewegung der Ablageeinheit und/oder des Roboters während des vorangegangenen Takts angepasst werden. Die Analyse zumindest einer Eigenschaft des Takts bzw. der Bewegung der Ablageeinheit und/oder des Roboters (z.B. deren/dessen Geschwindigkeitsprofil) ermöglicht die Überwachung und/oder Optimierung nachfolgender Takte. Beispielsweise können auch der Zeitpunkt, der Ort und/oder die Dynamik der Bewegungen eines Greifers des Roboters (z.B. zum Aufnehmen oder Ablegen der Portionen), der tatsächlich in direkten Kontakt mit den Portionen kommt, in Abhängigkeit der erfassten und/oder gespeicherten Charakteristika des Takts und/oder der Bewegung der Ablageeinheit und/oder der Bewegung des Roboters selbst angepasst werden.

Alternativ oder zusätzlich kann zumindest eine charakteristische Eigenschaft der Bewegung des Roboters, insbesondere dessen Beschleunigungsprofil und/oder zumindest ein das Aufnehmen und/oder Ablegen der Portionen beeinflussender und/oder steuernder Parameter, in Abhängigkeit von zumindest einer charakteristischen Eigenschaft der aufzunehmenden Portion und/oder von zumindest einer charakteristischen Eigenschaft eines die Portion aufnehmenden Greifers des Roboters und/oder von zumindest einer charakteristischen Eigenschaft der Ablageeinheit angepasst wird. Eigenschaften der Portionen und/oder der Ablageeinheit können nämlich darauf Einfluss haben, wie der Roboter und/oder dessen Greifer, der tatsächlich mit der Portion in Kontakt kommt, am besten gesteuert wird, um das Verfahren möglichst effizient umzusetzen. Dies wurde erfindungsgemäß erkannt und dieser Erkenntnis durch die vorstehend beschriebene flexible Anpassbarkeit Rechnung getragen. Auch die Eigenschaften des Greifer selbst, beispielsweise dessen Typ (z.B. mechanische Greifer oder Vakuumgreifer) oder die Umstände oder Bedingungen beim Ergreifen der Portionen (z.B. Ausgestaltung der Aufnahmeposition; Eigenschaften des Untergrunds, auf dem die aufzunehmenden Portionen liegen;...) und/oder beim Ablegen der Portionen (z.B. Fallhöhe der Portionen; Ausgestaltung der Ablageposition; Eigenschaften des Untergrunds, auf dem die Portionen abzulegen sind;...) können bedarfsgerecht berücksichtigt werden.

Die Bewegungen des Roboters und/oder die Bewegungen von dessen Greifer können, wie auch die Betriebsparameter der anderen Komponenten der mit dem erfindungsgemäßen Verfahren betriebenen Vorrichtung, kontinuierlich oder zu diskreten Zeitpunkten überwacht werden. Insbesondere wird laufend und dynamisch zumindest ein Korrekturfaktor bestimmt. Der Korrekturfaktor kann von einer Steuerung der Vorrichtung ermittelt werden. Es ist jedoch auch möglich, diesen Faktor vorzugeben und/oder bei Bedarf einzugeben. Er kann die Grundlage für die Anpassung der Steuerung der Fördervorrichtung, des Roboters (und eines ihm zugeordneten Greifers) und/oder weiterer Komponenten sein.

Insbesondere wenn ein neuer Produktionszyklus beginnt (beispielsweise bei Betriebsbeginn oder nach dem Wechseln der Folienbahn), kann vorgesehen sein, die Bewegungen des Roboters anzupassen. Schließlich ist es möglich, dass sich in der Zwischenzeit die Rahmenbedingungen geändert haben. Bevorzugt bewegt er sich dann zunächst langsamer als im Normalbetrieb (insbesondere beim "Anfahren der ersten Ablageposition), beispielsweise um einer Anpassung und/oder einem entsprechenden Lernprozess "Zeit zu geben" und/oder auf Störungen besser reagieren zu können.

Gemäß einer Ausführungsform wird zumindest eine charakteristische Eigenschaft des Takts der Fördervorrichtung in Abhängigkeit von zumindest einer Eigenschaft der zumindest einen Lebensmittelportion bestimmt. Beispielsweise dürfen hohe Scheibenstapel einer Portion nicht zu sehr beschleunigt werden, da die einzelnen Scheiben ansonsten verrutschen bzw. die Portionsstapel umfallen könnten. Ein weiteres Beispiel stellen Lebensmittelportionen dar, die sehr dünn aufgeschnitten wurden und gekräuselt in eine Verpackung gelegt werden sollen. Hierbei muss der Roboter vorsichtiger und damit langsamer arbeiten, um die Portionen nicht zu beschädigen. Daher muss auch der Takt der Fördervorrichtung an die langsamere Arbeitszeit des Roboters angepasst werden, damit diesem genügend Zeit bleibt, um die Lebensmittelportionen sorgfältig in der Verpackung abzulegen.

Zur Leistungssteigerung der Verpackungsvorrichtung ist es also nicht möglich, die Fördervorrichtung maximal schnell zu beschleunigen. Auch der Roboter kann die verschiedenen Portionen der Lebensmittelprodukte nicht maximal schnell aufnehmen und ablegen, da die Positionierung der Lebensmittelprodukte in einer Verpackung unter anderem auch optisch hohen Ansprüchen genügen muss. Zudem ist die maximal mögliche Beschleunigung der Fördervorrichtung oftmals von den Eigenschaften der Ablageeinheit abhängig. Bei einer Folienbahn ist dies beispielsweise deren Dicke und/oder Qualität. Bei manchen Folientypen wird beispielsweise die Oberfolie während eines Vorzugs abgewickelt und oberhalb der Mulden positioniert, was ein "sanfteres" Bewegungsprofil der Bahn erforderlich macht.

Gemäß einer weiteren Ausführungsform des Verfahrens kann zumindest eine charakteristische Eigenschaft des Takts der Fördervorrichtung dynamisch variiert werden. Beispielsweise durch das Erfassen der charakteristischen Eigenschaften der Bewegung der Ablageeinheit und/oder des Takts der Fördervorrichtung erhält die Verpackungsvorrichtung einen dynamischen Messwert aus dem vorangegangenen Takt, mit dem sie im nachfolgenden Takt die Voransteuerung der Fördervorrichtung optimieren kann. Mit anderen Worten kann der Takt auch während des Betriebs bedarfsgerecht angepasst werden, falls dies erforderlich oder erwünscht ist. Gleiches gilt für zumindest eine charakteristische Eigenschaft der Bewegung des Roboters (dies schließt Bewegungen eines Greifers des Roboters ein). Auch diese Eigenschaft kann dynamisch variiert werden.

Gemäß einer weiteren Ausführungsform legt der Roboter zumindest eine Portion bei einem Ein- und/oder Austritt der Ablageeinheit in bzw. aus einem dem Roboter zugeordneten Arbeitsbereich in oder auf der Ablageeinheit ab. Der Roboter wartet also nicht den Stillstand der Ablageeinheit ab, sondern positioniert die Lebensmittel auch während des Vorzugs, insbesondere während die Ablageeinheit in den Arbeitsbereich des Roboters eintritt bzw. während die Ablageeinheit diesen wieder verlässt. Dadurch soll die für den Roboter verfügbare Arbeitszeit optimal genutzt werden. Vorzugsweise legt der Roboter die ersten Lebensmittelportionen direkt kurz nach dem Eintritt der Ablageeinheit in den Arbeitsbereich des Roboters bzw. die letzten Portionen kurz vor Verlassen des Arbeitsbereichs ab, damit die ihm zur Verfügung stehende Arbeitszeit pro Takt optimal genutzt wird.

Gemäß einer weiteren Ausführungsform wird der Roboter während der Bewegungsphase zumindest abschnittsweise synchron mit der Ablageeinheit bewegt, insbesondere kurz vor dem Ablegen der Portion. Diese Synchronisierung ermöglicht es, dass die Lebensmittelportionen auch während der Bewegung der Ablageeinheit präzise abgelegt werden können.

Vorzugsweise bildet die Ablageeinheit eine fortlaufende zweidimensionale Matrix von Ablagepositionen, die mit Lebensmittelportionen bestückbar sind (z.B. eine Bahn mit aufeinanderfolgenden - in der Regel gleichartigen - Matrizen, die beispielsweise jeweils die Dimension 1 × 4, 2 × 4, 3 × 4, 4 × 4, 4 × 5 oder ... aufweisen). Die Größe der Ordnung der Matrix, die in den Arbeitsbereich des Roboters eintritt, kann je nach Bedarf variieren.

Insbesondere umfasst die Ablageeinheit eine Mehrzahl von Mulden und/oder Schalen, die bevorzugt aus einer Folie durch einen Tiefziehprozess erzeugt wurden. Wie eingangs geschildert wurde, kann eine solche Tiefziehvorrichtung der Verpackungsvorrichtung vorgelagert sein. Diese Mulden und/oder Schalen bilden beispielsweise eine zweidimensionale Matrix der vorstehend beschriebenen Art. Insbesondere wird die in einem Takt gebildete "Muldenmatrix" im nächsten Takt gefüllt und dann anschließend im übernächsten Takt versiegelt. Die vorliegende Erfindung umfasst auch das auf bzw. mit beliebigen Fördermitteln erfolgende Bewegen von vorgefertigten Mulden/Trays durch den Arbeitsbereich eines Roboters zum Empfang von Portionen.

Gemäß einer Ausführungsform nimmt der Roboter zugleich mehrere Portionen des Lebensmittelprodukts von der Aufnahmeposition auf und legt diese zugleich oder nacheinander an verschiedenen Positionen der Ablageeinheit ab. Es ist also einerseits möglich, dass der Roboter mehrere Produktgreifer umfasst, die zugleich mehrere Portionen aufnehmen und auch zugleich an verschiedenen Positionen ablegen können. Andererseits ist es auch denkbar, dass der Roboter mit nur einem Produktgreifer mehrere Portionen aufnimmt und anschließend nacheinander an verschiedenen Positionen der Ablageeinheit wieder ablegt. Es können auch einer Einlegestation mehrere Roboter zugeordnet sein.

Gemäß einer weiteren Ausführungsform wird eine Bewegung der Ablageeinheit und/oder der Fördervorrichtung erfasst (beispielsweise die Geschwindigkeit). Insbesondere wird diese durch einen Sensor, vorzugsweise durch einen elektromechanischen oder einen optischen Sensor erfasst. Beispielsweise ist der Sensor ein Inkrementalgeber oder ein einen konkreten Datenwert (digital oder analog) gebender Sensor. Auch eine Erfassung der Bewegung über den oder die Antriebe der Fördervorrichtung ist in diesem Zusammenhang denkbar. Dies ermöglicht einen Abgleich der Bewegung der Ablageeinheit und/oder der Fördervorrichtung mit vorbestimmten Werten (IST-SOLL-Abgleich).

Insbesondere ist eine Auswerteeinrichtung vorgesehen, mit der eine räumliche Anordnung und/oder Ausgestaltung der Ablageeinheit erfasst wird, wobei insbesondere die Auswerteeinrichtung einen optischen Sensor, bevorzugt eine Kamera, umfasst. Es ist auch denkbar, an der Ablageeinheit Markierungen vorzusehen (vorzugsweise in deren Randbereich), die die Erfassung der Bewegung der genannten Einheit erleichtern. Durch eine Kombination aus dem elektromechanischen Sensor, welche die Bewegung der Fördervorrichtung erfassen kann, und dem optischen Sensor, welcher die Bewegung der Ablageeinheit erfassen kann, kann aber auch erkannt werden, ob beispielsweise keine Bewegung der Ablageeinheit stattfindet obwohl die Fördervorrichtung sich noch in Bewegung befindet.

Durch Erkennen eines solchen Fehlers kann die Verpackungsvorrichtung beispielsweise automatisch gestoppt und/oder eine Meldung an den Bediener gesendet werden.

Vorzugsweise wird der Roboter in Abhängigkeit von der erfassten Bewegung der Ablageeinheit und/oder der Fördervorrichtung gesteuert. Der Roboter kann also beispielsweise bei Erkennung eines Fehlers automatisch seine Bewegung stoppen bzw. eine Fehlermeldung ausgeben oder, insbesondere bei nur vorübergehenden Störungen, seine Bewegungsmuster anpassen. Ebenso kann er aber auch nach Erkennung der Ordnung der Ablagematrix festlegen, in welcher Reihenfolge die Ablagepositionen bestückt werden, um gemäß der für ihn effizientesten Lösung zu arbeiten. Durch die erfasste Bewegung der Ablageeinheit kann zudem beispielsweise auch erkannt werden, wann eine Bahn der Verpackung zu Ende ist. Die Bewegung des Roboters wird als Konsequenz angehalten und erst wieder gestartet, wenn erkannt wird, dass eine neue Bahn eingelegt wurde.

Gemäß einer Ausführungsform wird eine Reihenfolge des Ablegens von zumindest zwei Portionen an verschiedenen Ablagepositionen in Abhängigkeit von der relativen Lage und/oder Entfernung der Aufnahmeposition und der Ablageposition und/oder von zumindest einer charakteristischen Eigenschaft des Takts der Fördervorrichtung und/oder zumindest einer charakteristischen Eigenschaft der Bewegung der Ablageeinheit gewählt. Abhängig von diesen Eigenschaften soll so die benötigte Arbeitszeit des Roboters am effizientesten genutzt werden.

Gemäß einer weiteren Ausführungsform sind zumindest zwei Roboter vorgesehen, denen unterschiedliche oder gleiche Arbeitsbereiche zugeordnet sind, in denen die zumindest eine Portion des Lebensmittelprodukts aufgenommen, bewegt und abgelegt wird. Es ist demnach auch möglich, dass zwei Portionen von beispielsweise zwei verschiedenen Seiten aus arbeiten und eine gemeinsame Matrix von Ablagepositionen mit Lebensmittelprodukten belegen. Gleichwohl ist es aberzusätzlich oder alternativ - auch möglich, dass mehrere Roboter in Vorzugsrichtung betrachtet nacheinander bzw. hintereinander angeordnet sind. Dadurch kann zum Beispiel realisiert werden, dass verschiedene Sorten von Lebensmittelprodukten in der gleichen Verpackung abgelegt und somit Mischportionen verpackt werden können.

Erfindungsgemäß ist ferner auch eine Verpackungsvorrichtung für Lebensmittelprodukte mit einer Fördervorrichtung zur Bewegung einer Ablageeinheit und mit einem Roboter zur Aufnahme, Bewegung und Ablage zumindest einer Lebensmittelportion in oder auf der Ablageeinheit vorgesehen, die eine Steuerung umfasst, die dazu ausgebildet ist, die Fördervorrichtung und den Roboter gemäß zumindest einem oben beschriebenen Verfahren anzusteuern.

Insbesondere umfasst die Fördervorrichtung ein Förderband, ein Kettenfördersystem, eine Folienvorschubeinrichtung einer Verpackungsmaschine und/oder ein elektromagnetisches Lineartransportsystem.

Gemäß einer Ausführungsform umfasst die Ablageeinheit eine Folie, und die Verpackungsvorrichtung umfasst ferner eine dem Roboter vorgelagerte Tiefzieheinrichtung oder Formstation zum Ausbilden von Mulden und/oder Schalen in der Folie. Das Ausbilden der Mulden/Schalen ist somit mit dem Ausbilden der Ablagematrix gleichzustellen. Die Ordnung dieser Ablagematrix kann dementsprechend beispielsweise je nach Art der Verpackung, welche wiederum von der Sorte des Lebensmittelprodukts abhängen kann, variieren.

Gemäß einer weiteren Ausführungsform umfasst die Verpackungsvorrichtung ferner eine dem Roboter nachgelagerte Siegelstation zum Verschließen der Ablageeinheit, insbesondere von darin ausgebildeten Mulden und/oder Schalen.

Unter Bezugnahme auf die beigefügten Figuren werden nachfolgend rein beispielhaft vorteilhafte Ausführungsformen des erfindungsgemäßen Verfahrens und einer erfindungsgemäßen Verpackungsvorrichtung beschrieben. Es zeigen:
- Fig. 1 bis 4: eine Ausführungsform des erfindungsgemäßen Verfahrens in aufeinanderfolgenden Schritten;
- Fig. 5: die Bewegung des Roboters und den Vorzug der Ablageeinheit in Abhängigkeit der Zeit gemäß des Stands der Technik;
- Fig. 6: die Bewegung des Roboters und den Vorzug der Ablageeinheit in Abhängigkeit der Zeit gemäß der Erfindung und
- Fig. 7: eine Ausführungsform der erfindungsgemäßen Verpackungsvorrichtung.

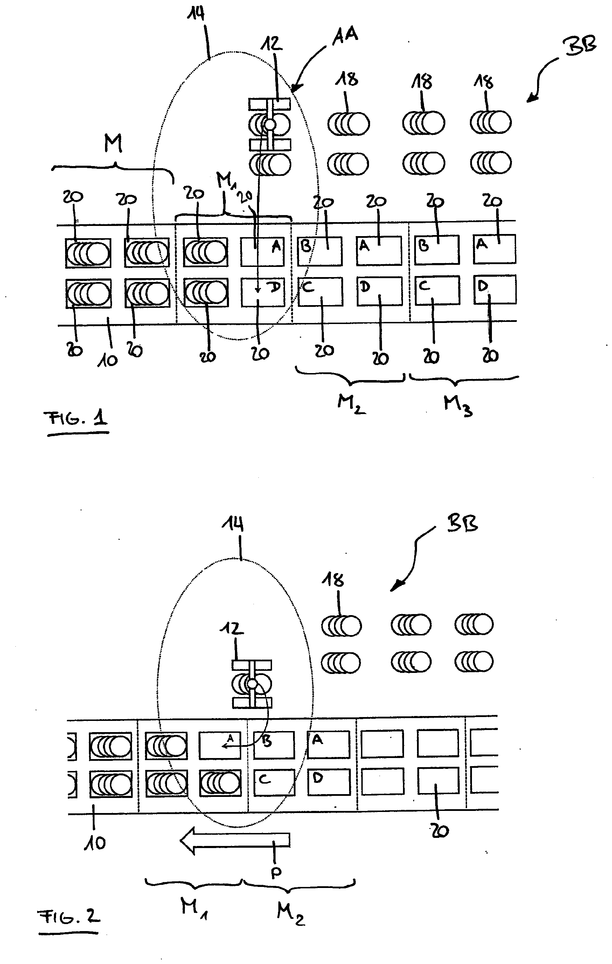

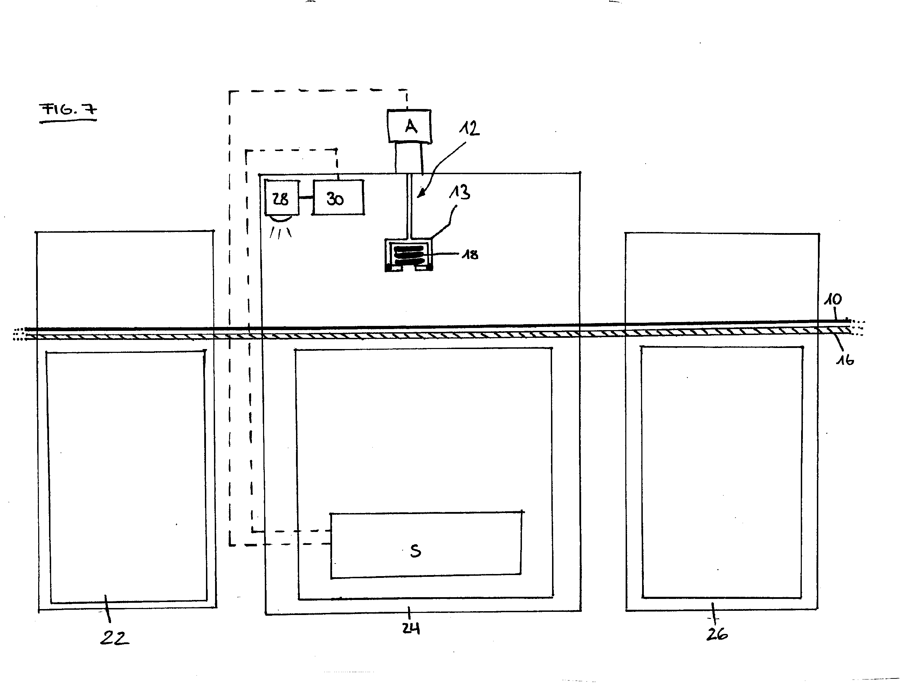

Die Figuren 1 - 4 zeigen den Ablauf einer Ausführungsform des erfindungsgemäßen Verfahrens zum Positionieren von Portionen 18 von Lebensmittelprodukten in oder auf einer Ablageeinheit 10 einer Verpackungsmaschine. Die Ablageeinheit 10, bevorzugt eine Folienbahn, wird durch eine nicht gezeigte Fördervorrichtung 16 (siehe Fig. 7) getaktet nach links bewegt. Die Ablageeinheit oder Folie 10 umfasst mehrere aufeinanderfolgende Ablagematrizen M, M₁, M₂, M₃, ..., die jeweils wiederum vier Ablagepositionen A, B, C, D aufweisen (2 × 2 Ablagematrix). Andere Konfigurationen und Matrixarten sind ebenfalls denkbar. Die Abgrenzung zwischen den Ablagematrizen M, M₁, M₂, M₃ ist durch eine gestrichelte Linie dargestellt.

Die Ablagepositionen A, B, C, D können beispielsweise Schalen oder Mulden 20 sein, die in einer vorgelagerten Tiefziehvorrichtung 22 (siehe Fig. 7) hergestellt wurden.

Zunächst werden die Portionen 18 in einem Bereitstellungsbereich BB bereitgestellt. Dort werden sie von einem Roboter 12 aufgenommen, um in den Mulden 20 abgelegt zu werden. Der Arbeitsbereich 14 des Roboters 12 wird grob durch die gestrichelt dargestellte Ellipse definiert.

Es soll hierbei keine Rolle spielen, ob die Portionen 18 bereits in einer parallel laufenden Vorrichtung zusammengestellt und erst anschließend zum Bereitstellungsbereich BB transportiert werden, ob die Portionen 18 direkt im Bereitstellungsbereich BB zusammengestellt werden oder ob die Portionen 18 erst vom Roboter 12 auf der Ablageeinheit 10 zusammengestellt werden. Jede dieser Varianten wäre im erfindungsgemäßen Verfahren gleichermaßen denkbar.

In Fig. 1 befindet sich die Ablageeinheit 10 im Stillstand (Ruhephase). Die ersten beiden Positionen B und C der Ablagematrix M₁ sind bereits belegt. Während dieser Ruhephase der Ablageeinheit 10 werden die Positionen C und D von dem Roboter 12 auf herkömmliche Art befüllt. In Fig. 1 hat der Roboter 12 gerade eine Portion 18 in einer Aufnahmeposition AA in dem Bereitstellungsbereich BB aufgenommen, um diese - wie durch einen Pfeil angedeutet - in der Position D abzulegen. Die Ablageposition C wurde schon vorher befüllt.

Zur Beschleunigung des Befüllens der Matrix M₁ wird die letzte Position A nicht während dem Stillstand/Ruhephase der Folie 10 befüllt, sondern während deren Vorzug (Bewegungsphase), was durch den Pfeil P in Fig. 2 gezeigt ist. Durch diesen Vorzug wird die nächste Matrix M₂ in den Arbeitsbereich 14 des Roboters 12 gebracht, um diese zu befüllen.

Die Taktung des Vorzugs bzw. das Bewegungsprofil der Folie 10 kann fest vorgegeben sein. Es ist jedoch auch möglich, die Bewegung der Folie 10 bzw. der entsprechenden Fördervorrichtung zu überwachen und bei Bedarf entsprechend anzupassen. Ein Takt umfasst jeweils eine Ruhephase und eine Bewegungsphase der Folie 10.

In Figur 2 ist das Befüllen der letzten Position A der Ablagematrix M₁ dargestellt. Die Ablageeinheit oder Folie 10 befindet sich hier in Bewegung, was durch den Pfeil P angedeutet ist (Bewegungsphase). Während der Bewegung der Fördervorrichtung 16 und damit der Ablageeinheit 10 wird die letzte Position A der Ablagematrix M₁ vom Roboter 12 bestückt, bevor diese dessen Arbeitsbereich 14 verlässt. Die Positionen B, C der nächsten Matrix M₂ fahren währenddessen bereits in den Arbeitsbereich 14 ein.

Beispielsweise kann eine Steuereinrichtung (nicht gezeigt) der Verpackungsmaschine 12 anhand der im vorangegangen Takt X erfassten Bewegung der Fördervorrichtung 16 abschätzen, zu welchem Zeitpunkt die Fördervorrichtung 16 mit dem Vorzug der Ablageeinheit 10 beginnen darf, welches Vorzugsbewegungsprofil zu wählen ist und/oder wie das Bewegungsprofil des Roboters 12 anzupassen ist, um die letzte Portion 18 auf der letzten Position A der Ablagematrix M₁ noch innerhalb des Arbeitsbereiches 14 ablegen zu können.

Während des Ablegens der letzten Portion 18 auf der letzten Position A bewegt sich der Roboter 12 synchron mit der Bewegung der Ablageeinheit 10. D.h. der Roboter 12 bewegt sich zumindest für einen gewissen Zeitraum kurz vor dem Ablegen der Portion 18 parallel zu der Folie 10, was auch durch die Formgebung eines die Bewegung des Roboters 12 symbolisierenden Pfeils angedeutet wird. Dadurch wird erreicht, dass auch während der Bewegungsphase der Ablageeinheit 10 ein präzises Ablegen der Portionen vom Roboter 12 auf der Ablageeinheit 10 möglich ist.

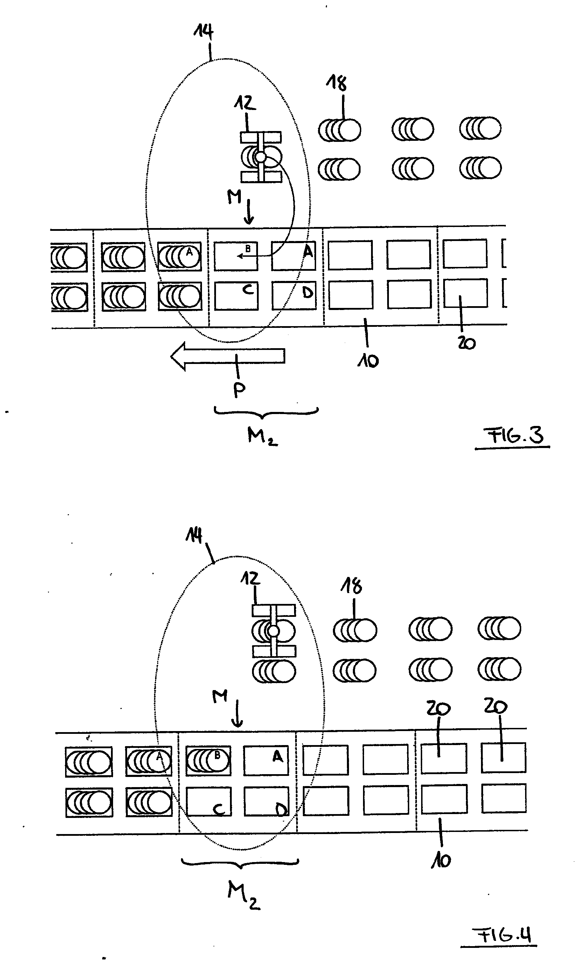

Während der gleichen Bewegungsphase der Ablageeinheit 10 (siehe Pfeil P), bei der die letzte Portion 18 auf der Position A der Ablagematrix M₁ abgelegt wird, belegt der Roboter 12 auch die erste Position B der nachfolgenden Ablagematrix M₂, die während des Ausfahrens der Ablagematrix M₁ aus dem Arbeitsbereich 14 des Roboters 12 gleichzeitig in den Arbeitsbereich 14 nachrückt (siehe Fig. 3). Hierbei ist es das Ziel, dass der Roboter 12 die erste Position B dieser nachfolgenden Ablagematrix M₂ möglichst früh, sobald dies ablaufmäßig möglich ist, bestückt. Somit soll dem Roboter 12 maximal viel Zeit zur Verfügung gestellt werden, um in der darauffolgenden Ruhephase der Ablageeinheit 10 insbesondere jene Positionen der Ablagematrix M₂ zu belegen, welche am weitesten von der Aufnahmeposition AA der Portionen 18 entfernt sind. Zur Belegung dieser Positionen C, D ist nämlich am meisten Zeit notwendig, da der Roboter 12 eine größere Strecke zwischen Aufnahmeposition AA und Ablageort zurücklegen muss.

Auch bei der Befüllung der Position B fährt der Roboter 12 kurz vor dem Ablegen der zuvor aufgenommenen Portion 18 für einen gewissen Zeitraum synchron mit der Ablageeinheit 10 mit, um die Lebensmittelportion 18 möglichst präzise und sanft auf der Position B der Ablagematrix M₂ ablegen zu können.

In Fig. 4 ist die nachfolgende Ruhephase der Ablageeinheit 10 dargestellt. In dieser Phase werden, wie in Bezugnahme auf Fig. 1 beschrieben, die Positionen C und D der Ablagematrix M₂ befüllt.

Im Laufe des Verfahrens können zumindest eine charakteristische Eigenschaft des Takts der Fördervorrichtung 16 und/oder zumindest eine charakteristische Eigenschaft der Bewegung der Ablageeinheit 10 erfasst und/oder gespeichert werden. Dadurch kann im Verlauf des Verfahrens die Bewegung der Ablageeinheit 10 bzw. die Bewegung des Roboters 12 bedarfsgerecht angepasst werden.

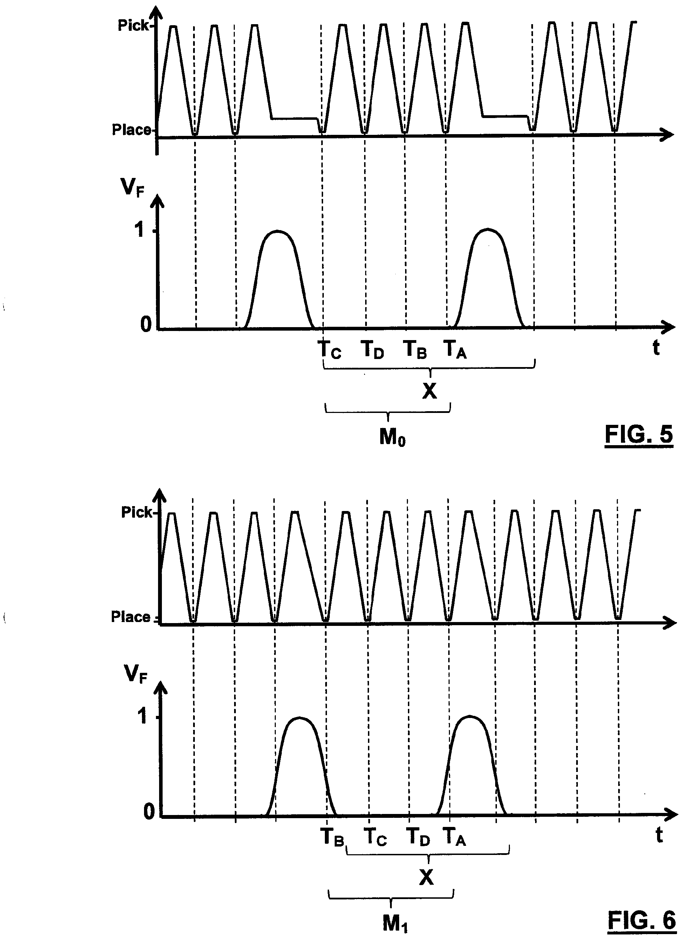

In Figur. 5 und 6 sind die Bewegung des Roboters 12 (in der jeweiligen Fig. oben) bzw. der Vorzug der Ablageeinheit 10 (in der jeweiligen Fig. unten) in Abhängigkeit der Zeit t dargestellt. Bei der Bewegung des Roboters 12 ist angegeben, zu welchem Zeitpunkt er eine Portion 18 aufnimmt ("Pick") und wann er sie wieder abgibt ("Place"). Es versteht sich, dass das Bewegungs- oder Geschwindigkeitsprofil des Roboters 12 beliebig anpassbar ist, bei Bedarf auch während des Betriebs. Das Profil der Geschwindigkeit v_{F} der Folienbahn während des Vorzugs stellt ebenfalls nur ein Beispiel dar. In der Ruhephase bewegt sich die Folie nicht (v_{F} = 0). Während des Vorzugs steigt die Geschwindigkeit v_{F} der Folienbahn an, erreicht einen Maximalwert ( v_{F} / v_{F, max} = 1) und fällt dann wieder auf 0, woraufhin die nächste Ruhephase beginnt.

Zusätzlich dazu sind die diskreten Zeitpunkte T_{A}, T_{B}, T_{C} und T_{D}, an denen der Roboter 12 die Portionen 18 auf den verschiedenen Positionen A, B, C, D der Ablagematrix M, M₁, M₂, M₃ bzw. M₀ ablegt, als gestrichelte Linien eingezeichnet. In Fig. 5 bezeichnet M₀ eine Ablagematrix, die nach einem Vorgehen gemäß dem Stand der Technik befüllt wird. Es ist klar zu erkennen, dass gemäß dem Stand der Technik während des Vorzugs der Ablageeinheit 10 kein Ablegen der Portionen 18 von Seiten des Roboters 12 stattfindet (vgl. Fig. 5). Der Roboter 12 hat nichts zu tun und verharrt mit einer bereits aufgenommenen Portion in einer Warteposition, beispielsweise in der Nähe einer der Ablagepositionen A, B, C, D. Alle Portionen 18 werden in der Ruhephase der Ablageeinheit 10 auf der Matrix M₀ abgelegt. Danach wird die Ablageeinheit - wie vorstehend beschrieben - nach bewegt, damit in der darauffolgenden Ruhephase die nächste Matrix M₀ befüllt werden kann.

Im Gegensatz dazu kann man in Figur 6 erkennen, dass erfindungsgemäß auch während des Vorzugs der Ablageeinheit 10 Lebensmittelprodukte 18 vom Roboter 12 abgelegt werden. Somit kann die Ruhephase der Ablageeinheit 10 deutlich verkürzt werden, da die Ablagepositionen A, B der Matrix M₁ während der Bewegungsphase der Ablageeinheit 10 befüllt werden. In der Ruhephase müssen somit nur noch die übrigen beiden Positionen C, D vom Roboter 12 belegt werden. Die verkürzte Ruhephase der Ablageeinheit 10 wird auch durch die jeweils eingezeichnete Taktlänge X der Ablageeinheit 10 (bzw. der Fördervorrichtung 16) verdeutlicht. Es ist klar erkennbar, dass die Länge eines Takts X beim erfindungsgemäßen Verfahren (Fig. 6) deutlich kürzer als die Taktlänge X beim Verfahren gemäß dem Stand der Technik (Fig. 5) ist. Und dies bei gleicher Bewegungsdynamik des Roboters 12 in den Ruhephasen, was daran zu erkennen ist, dass die gestrichelten Linien in diesen Phasen in den Fig. 5 und 6 den gleichen Abstand aufweisen. Somit kann die Gesamtzeit, die zum Befüllen einer Folienbahn 10 notwendig ist, verkürzt und damit die Verpackungsvorrichtung effizienter gemacht werden.

In Figur 7 ist schematisch die erfindungsgemäße Verpackungsvorrichtung 24 dargestellt. Diese umfasst eine Fördervorrichtung 16, welche die Ablageeinheit 10 bewegt, und einen Roboter 12, der mittels eines Greifers 13 zumindest eine Lebensmittelportion 18 aufnimmt, diese im Raum bewegt (von der Aufnahmeposition AA zu der jeweiligen Ablageposition A, B, C, D) und in oder auf der Ablageeinheit 10 ablegt. Die Fördervorrichtung 16 kann hierbei ein Förderband, ein Kettenfördersystem, eine Folienvorschubeinrichtung und/oder ein elektromagnetisches Lineartransportsystem umfassen. Außerdem umfasst die Verpackungsvorrichtung 24 ferner eine Steuerung S. Diese Steuerung S ist dazu ausgebildet, den Roboter 12 bzw. dessen Antrieb A und die Fördervorrichtung 16 nach dem oben beschriebenen Verfahren anzusteuern.

Des Weiteren sind in der Verpackungsvorrichtung 24 zumindest ein Sensor 28 und eine Auswerteeinrichtung 30 angeordnet. Der Sensor 28 ist vorzugsweise ein elektromechanischer oder optischer Sensor, insbesondere eine Kamera, mit dem die Bewegung der Ablageeinheit 10 und/oder der Fördervorrichtung 16 erfasst werden soll. Wie vorstehend beschrieben wurde, kann durch den Sensor 28 bzw. die Auswerteeinrichtung 30 die Bewegung der Ablageeinheit 10 und/oder der Fördervorrichtung 16 erfasst und dadurch eventuelle Fehler frühzeitig erkannt werden. Die Auswerteeinrichtung 30 ermöglicht es außerdem, anhand dieser erfassten Daten die Ausgestaltung der Ablageeinheit 10 zu ermitteln. Durch Markierungen auf der Ablageeinheit 10 und/oder der Fördervorrichtung 16 kann so nicht nur die Schalen- oder Muldengeometrie, sondern auch die Bewegung selbst der Ablageeinheit 10 ermittelt werden. Dies soll es dem Roboter 12 ermöglichen, seine Bewegung zu steuern und an die momentanen Bedingungen, wie beispielsweise die momentane Taktgeschwindigkeit der Fördervorrichtung 16, die Sorte des zu bewegenden Lebensmittelprodukts 18, die Ordnungsgröße der Ablagematrix M oder ähnlichen variablen Bedingungen, automatisch anzupassen.

Der Verpackungsvorrichtung 24 sind außerdem eine Tiefziehvorrichtung oder eine Formstation 22 zum Ausbilden von Mulden und/oder Schalen 20 in der Folie 11 und eine Versiegelungsvorrichtung 26 zum Versiegeln der Mulden und/oder Schalen 20 vor- bzw. nachgelagert.

### Bezugszeichenliste

- 10: Ablageeinheit, Folie
- 12: Roboter
- 13: Greifer
- 14: Arbeitsbereich
- 16: Fördervorrichtung
- 18: Lebensmittelproduktportion
- 20: Mulden, Schalen
- 22: Tiefziehvorrichtung
- 24: Verpackungsvorrichtung
- 26: Versiegelungsvorrichtung
- 28: Sensor
- 30: Auswerteeinheit
- T_{A}, T_{B}, T_{C}, T_{D}: Ablagezeitpunkte
- X: Takt
- A, B, C, D: Ablageposition
- M₀: Ablagematrix
- M, M₁, M₂, M₃: Ablagematrix
- P: Pfeil
- S: Steuerung
- X: Takt
- AA: Aufnahmeposition
- BB: Bereitstellungsbereich
- v_{F}: Vorzugsgeschwindigkeit
- A: Antrieb

## Patentansprüche

1. Verfahren zum Positionieren zumindest eines Lebensmittelprodukts in oder auf einer Ablageeinheit (10), insbesondere einem Teil einer Verpackung, mit einer getaktet bewegbaren Fördervorrichtung (16) zur Bewegung der Ablageeinheit (10) und mit zumindest einem Roboter (12), der dazu ausgebildet ist, das Lebensmittelprodukt (18) an einer Aufnahmeposition (AA) aufzunehmen, zu bewegen und in oder auf der Ablageeinheit (10) abzulegen, wobei
- jeder Takt (X) der Bewegung der Fördervorrichtung (16) zumindest eine Bewegungsphase und zumindest eine Ruhephase umfasst;
- der Roboter (12) zumindest eine Portion des Lebensmittelprodukts (18) aufnimmt; und
- der Roboter (12) die zumindest eine Portion (18) während der Bewegungsphase in oder auf der Ablageeinheit (10) ablegt.

2. Verfahren nach Anspruch 1,
**dadurch gekennzeichnet, dass**
zumindest eine charakteristische Eigenschaft des Takts (X) der Fördervorrichtung (16) und/oder zumindest eine charakteristische Eigenschaft der Bewegung der Ablageeinheit (10) und/oder des Roboters (12) erfasst und/oder gespeichert wird.

3. Verfahren nach Anspruch 2,
**dadurch gekennzeichnet, dass**
zumindest eine charakteristische Eigenschaft des Takts (X) der Fördervorrichtung (16) in Abhängigkeit von der erfassten und/oder gespeicherten Eigenschaft des vorangegangenen Takts (X) bzw. der Bewegung der Ablageeinheit (10) während des vorangegangenen Takts (X) angepasst wird.

4. Verfahren nach Anspruch 2 oder 3,
**dadurch gekennzeichnet, dass**
zumindest eine charakteristische Eigenschaft der Bewegung des Roboters (12), insbesondere dessen Beschleunigungsprofil und/oder zumindest ein das Aufnehmen und/oder Ablegen der Portionen (18) beeinflussender und/oder steuernder Parameter, in Abhängigkeit von der erfassten und/oder gespeicherten Eigenschaft des vorangegangenen Takts (X) bzw. der Bewegung der Ablageeinheit (10) und/oder des Roboters (12) während des vorangegangenen Takts (X) angepasst wird.

5. Verfahren nach zumindest einem der vorstehenden Ansprüche,
**dadurch gekennzeichnet, dass**
zumindest eine charakteristische Eigenschaft der Bewegung des Roboters (12), insbesondere dessen Beschleunigungsprofil und/oder zumindest ein das Aufnehmen und/oder Ablegen der Portionen (18) beeinflussender und/oder steuernder Parameter, in Abhängigkeit von zumindest einer charakteristischen Eigenschaft der aufzunehmenden Portion und/oder von zumindest einer charakteristischen Eigenschaft eines die Portion aufnehmenden Greifers (13) des Roboters (12) und/oder von zumindest einer charakteristischen Eigenschaft der Ablageeinheit (10) angepasst wird.

6. Verfahren nach zumindest einem der vorstehenden Ansprüche,
**dadurch gekennzeichnet, dass**
zumindest eine charakteristische Eigenschaft des Takts (X) der Fördervorrichtung (16) in Abhängigkeit von zumindest einer Eigenschaft der zumindest einen Lebensmittelportion (18) bestimmt wird.

7. Verfahren nach zumindest einem der vorstehenden Ansprüche,
**dadurch gekennzeichnet, dass**
zumindest eine charakteristische Eigenschaft des Takts (X) der Fördervorrichtung (16) dynamisch variiert wird.

8. Verfahren nach zumindest einem der vorstehenden Ansprüche,
**dadurch gekennzeichnet, dass**
zumindest eine charakteristische Eigenschaft der Bewegung des Roboters (12) dynamisch variiert wird.

9. Verfahren nach zumindest einem der vorstehenden Ansprüche,
**dadurch gekennzeichnet, dass**
der Roboter (12) die zumindest eine Portion (18) bei einem Ein- und/oder Austritt der Ablageeinheit (10) in bzw. aus einem dem Roboter (12) zugeordneten Arbeitsbereich (14) in oder auf der Ablageeinheit (10) ablegt.

10. Verfahren nach zumindest einem der vorstehenden Ansprüche,
**dadurch gekennzeichnet, dass**
der Roboter (12) während der Bewegungsphase zumindest abschnittsweise synchron mit der Ablageeinheit (10) bewegt wird, insbesondere kurz vor dem Ablegen der Portion (18).

11. Verfahren nach zumindest einem der vorstehenden Ansprüche,
**dadurch gekennzeichnet, dass**
die Ablageeinheit (10) eine zweidimensionale Matrix (M, M₁, M₂, M₃) von Ablagepositionen (A, B, C, D) bildet, die mit Lebensmittelportionen (18) bestückbar sind.

12. Verfahren nach zumindest einem der vorstehenden Ansprüche 2 bis 11,
**dadurch gekennzeichnet, dass**
der Roboter (12) in Abhängigkeit von der erfassten Bewegung der Ablageeinheit (10) und/oder der Fördervorrichtung (16) gesteuert wird.

13. Verfahren nach einem der vorstehenden Ansprüche,
**dadurch gekennzeichnet, dass**
eine Reihenfolge des Ablegens von zumindest zwei Portionen (18) an verschiedenen Ablagepositionen (A, B, C, D) in Abhängigkeit von der relativen Lage und/oder Entfernung der Aufnahmeposition (AA) und der Ablagepositionen (A, B, C, D) und/oder von zumindest einer charakteristischen Eigenschaft des Takts (X) der Fördervorrichtung (16) und/oder zumindest einer charakteristischen Eigenschaft der Bewegung der Ablageeinheit (10) gewählt wird.

14. Verfahren nach zumindest einem der vorstehenden Ansprüche,
**dadurch gekennzeichnet, dass**
zumindest zwei Roboter (12) vorgesehen sind, denen unterschiedliche oder gleiche Arbeitsbereiche (14) zugeordnet sind, in denen die zumindest eine Portion des Lebensmittelprodukts (18) aufgenommen, bewegt und abgelegt wird.

15. Verpackungsvorrichtung (24) für Lebensmittelprodukte mit einer Fördervorrichtung (16) zur Bewegung einer Ablageeinheit (10) und mit einem Roboter (12) zur Aufnahme, Bewegung und Ablage zumindest einer Lebensmittelportion (18) in oder auf der Ablageeinheit (10), die ferner eine Steuerung (S) umfasst, die dazu ausgebildet ist, die Fördervorrichtung (16) und den Roboter (12) gemäß einem Verfahren nach zumindest einem der Ansprüche 1 bis 19 anzusteuern, insbesondere wobei die Fördervorrichtung (16) ein Förderband, ein Kettenfördersystem, eine Folienvorschubeinrichtung einer Verpackungsmaschine und/oder ein elektromagnetisches Lineartransportsystem umfasst, und/oder
die Ablageeinheit (10) eine Folie umfasst und dass die Verpackungsvorrichtung (24) ferner eine dem Roboter (12) vorgelagerte Tiefzieheinrichtung (22) oder Formstation (22) zum Ausbilden von Mulden und/oder Schalen (20) in der Folie (10) umfasst.

## Claims

1. A method for positioning at least one food product in or on a placement unit (10), in particular a part of a packaging, using a conveying apparatus (16), which can be moved in a clocked manner, for moving the placement unit (10) and using at least one robot (12) which is configured to pick up the food product (18) at a pick-up position (AA), to move it and to place it in or on the placement unit (10), wherein
- each cycle (X) of the movement of the conveying apparatus (16) comprises at least one movement phase and at least one rest phase;
- the robot (12) picks up at least one portion of the food product (18); and
- the robot (12) places the at least one portion (18) in or on the placement unit (10) during the movement phase.

2. A method in accordance with claim 1,
**characterized in that**
at least one characteristic property of the cycle (X) of the conveying apparatus (16) and/or at least one characteristic property of the movement of the placement unit (10) and/or the robot (12) is detected and/or stored.

3. A method in accordance with claim 2,
**characterized in that**
at least one characteristic property of the cycle (X) of the conveying apparatus (16) is adapted in dependence on the detected and/or stored property of the preceding cycle (X) or of the movement of the placement unit (10) during the preceding cycle (X).

4. A method in accordance with claim 2 or 3,
**characterized in that**
at least one characteristic property of the movement of the robot (12), in particular its acceleration profile and/or at least one parameter influencing and/or controlling the picking up and/or placement of the portions (18), is adapted in dependence on the detected and/or stored property of the preceding cycle (X) or of the movement of the placement unit (10) and/or the robot (12) during the preceding cycle (X).

5. A method in accordance with at least one of the preceding claims,
**characterized in that**
at least one characteristic property of the movement of the robot (12), in particular its acceleration profile and/or at least one parameter influencing and/or controlling the picking up and/or placement of the portions (18), is adapted in dependence on at least one characteristic property of the portion to be picked up and/or on at least one characteristic property of a gripper (13) of the robot (12) picking up the portion and/or on at least one characteristic property of the placement unit (10).

6. A method in accordance with at least one of the preceding claims,
**characterized in that**
at least one characteristic property of the cycle (X) of the conveying apparatus (16) is determined in dependence on at least one property of the at least one food portion (18).

7. A method in accordance with at least one of the preceding claims,
**characterized in that**
at least one characteristic property of the cycle (X) of the conveying apparatus (16) is dynamically varied.

8. A method in accordance with at least one of the preceding claims,
**characterized in that**
at least one characteristic property of the movement of the robot (12) is dynamically varied.

9. A method in accordance with at least one of the preceding claims,
**characterized in that**
the robot (12) places the at least one portion (18) in or on the placement unit (10) when the placement unit (10) enters and/or leaves a working region (14) associated with the robot (12).

10. A method in accordance with at least one of the preceding claims,
**characterized in that**
the robot (12) is at least sectionally moved synchronously with the placement unit (10) during the movement phase, in particular shortly before the placement of the portion (18).

11. A method in accordance with at least one of the preceding claims,
**characterized in that**
the placement unit (10) forms a two-dimensional matrix (M, M₁, M₂, M₃) of placement positions (A, B, C, D) which can be loaded with food portions (18).

12. A method in accordance with at least one of the preceding claims 2 to 11,
**characterized in that**
the robot (12) is controlled in dependence on the detected movement of the placement unit (10) and/or the conveying apparatus (16).

13. A method in accordance with any one of the preceding claims,
**characterized in that**
a sequence of the placement of at least two portions (18) at different placement positions (A, B, C, D) is selected in dependence on the relative position and/or distance of the pick-up position (AA) and the placement positions (A, B, C, D) and/or on at least one characteristic property of the cycle (X) of the conveying apparatus (16) and/or on at least one characteristic property of the movement of the placement unit (10).

14. A method in accordance with at least one of the preceding claims,
**characterized in that**
at least two robots (12) are provided with which different or the same working regions (14) are associated in which the at least one portion of the food product (18) is picked up, moved and placed.

15. A packaging apparatus (24) for food products having a conveying apparatus (16) for moving a placement unit (10) and having a robot (12) for picking up, moving and placing at least one food portion (18) in or on the placement unit (10), said packaging apparatus (24) further comprising a control (S) which is configured to control the conveying apparatus (16) and the robot (12) in accordance with a method according to at least one of the claims 1 to 19, in particular wherein the conveying apparatus (16) comprises a conveyor belt, a chain conveyor system, a film feed device of a packaging machine and/or an electromagnetic linear transport system, and/or
the placement unit (10) comprises a film, and in that the packaging apparatus (24) further comprises a deep-drawing device (22) or molding station (22) arranged upstream of the robot (12) for forming depressions and/or trays (20) in the film (10).

## Revendications

1. Procédé de positionnement d'au moins un produit alimentaire dans ou sur une unité de dépose (10), en particulier dans ou sur une partie d'un emballage, avec un dispositif de transport (16) déplaçable de manière cadencée pour déplacer l'unité de dépose (10) et avec au moins un robot (12) conçu pour prendre le produit alimentaire (18) à une position de prise (AA), le déplacer et le déposer dans ou sur l'unité de dépose (10),
dans lequel
- chaque cadence (X) du déplacement du dispositif de transport (16) comprend au moins une phase de déplacement et au moins une phase de repos ;
- le robot (12) prend au moins une portion du produit alimentaire (18) ; et
- le robot (12) dépose ladite au moins une portion (18) dans ou sur l'unité de dépose (10) pendant la phase de déplacement.

2. Procédé selon la revendication 1,
**caractérisé en ce que**
au moins une propriété caractéristique de la cadence (X) du dispositif de transport (16) et/ou au moins une propriété caractéristique du déplacement de l'unité de dépose (10) et/ou du robot (12) est détectée et/ou mémorisée.

3. Procédé selon la revendication 2,
**caractérisé en ce que**
au moins une propriété caractéristique de la cadence (X) du dispositif de transport (16) est adaptée en fonction de la propriété détectée et/ou mémorisée de la cadence précédente (X) ou du déplacement de l'unité de dépose (10) pendant la cadence précédente (X).

4. Procédé selon la revendication 2 ou 3,
**caractérisé en ce que**
au moins une propriété caractéristique du déplacement du robot (12), en particulier son profil d'accélération et/ou au moins un paramètre influençant et/ou commandant la prise et/ou la dépose des portions (18), est adaptée en fonction de la propriété détectée et/ou mémorisée de la cadence précédente (X) ou du déplacement de l'unité de dépose (10) et/ou du robot (12) pendant la cadence précédente (X).

5. Procédé selon l'une au moins des revendications précédentes,
**caractérisé en ce que**
au moins une propriété caractéristique du déplacement du robot (12), en particulier son profil d'accélération et/ou au moins un paramètre influençant et/ou commandant la prise et/ou la dépose des portions (18), est adaptée en fonction d'au moins une propriété caractéristique de la portion à prendre et/ou d'au moins une propriété caractéristique d'un préhenseur (13) du robot (12) prenant la portion et/ou d'au moins une propriété caractéristique de l'unité de dépose (10).

6. Procédé selon l'une au moins des revendications précédentes,
**caractérisé en ce que**
au moins une propriété caractéristique de la cadence (X) du dispositif de transport (16) est déterminée en fonction d'au moins une propriété de ladite au moins une portion de produit alimentaire (18).

7. Procédé selon l'une au moins des revendications précédentes,
**caractérisé en ce que**
au moins une propriété caractéristique de la cadence (X) du dispositif de transport (16) est variée dynamiquement.

8. Procédé selon l'une au moins des revendications précédentes,
**caractérisé en ce que**
au moins une propriété caractéristique du déplacement du robot (12) est variée dynamiquement.

9. Procédé selon l'une au moins des revendications précédentes,
**caractérisé en ce que**
le robot (12) dépose ladite au moins une portion (18) dans ou sur l'unité de dépose (10) lors d'une entrée et/ou d'une sortie de l'unité de dépose (10) dans ou hors d'une zone de travail (14) associée au robot (12).

10. Procédé selon l'une au moins des revendications précédentes,
**caractérisé en ce que**
le robot (12) est déplacé pendant la phase de déplacement au moins localement de manière synchrone avec l'unité de dépose (10), en particulier juste avant la dépose de la portion (18).

11. Procédé selon l'une au moins des revendications précédentes,
**caractérisé en ce que**
l'unité de dépose (10) forme une matrice bidimensionnelle (M, M₁, M₂, M₃) de positions de dépose (A, B, C, D) qui peuvent être équipées de portions de produit alimentaire (18).

12. Procédé selon l'une au moins des revendications précédentes 2 à 11,
**caractérisé en ce que**
le robot (12) est commandé en fonction du déplacement détecté de l'unité de dépose (10) et/ou du dispositif de transport (16).

13. Procédé selon l'une des revendications précédentes,
**caractérisé en ce que**
un ordre chronologique de la dépose d'au moins deux portions (18) à des positions de dépose différentes (A, B, C, D) est choisie en fonction de la situation et/ou distance relative de la position de prise (AA) et des positions de dépose (A, B, C, D) et/ou d'au moins une propriété caractéristique de la cadence (X) du dispositif de transport (16) et/ou d'au moins une propriété caractéristique du déplacement de l'unité de dépose (10).

14. Procédé selon l'une au moins des revendications précédentes,
**caractérisé en ce que**
il est prévu au moins deux robots (12) auxquels sont associées des zones de travail (14) différentes ou identiques, dans lesquelles ladite au moins une portion de produit alimentaire (18) est prise, déplacée et déposée.

15. Dispositif de conditionnement (24) de produits alimentaires, comprenant un dispositif de transport (16) destiné à déplacer une unité de dépose (10) et un robot (12) destiné à prendre, déplacer et déposer au moins une portion de produit alimentaire (18) dans ou sur l'unité de dépose (10), comprenant en outre une commande (S) réalisée pour piloter le dispositif de transport (16) et le robot (12) par un procédé selon l'une au moins des revendications 1 à 19, en particulier dans lequel le dispositif de transport (16) comprend une bande transporteuse, un système de transport à chaîne, un dispositif d'avance de film d'une machine de conditionnement et/ou un système électromagnétique de transport linéaire, et/ou
l'unité de dépose (10) comprend un film, et le dispositif de conditionnement (24) comprend en outre un dispositif d'emboutissage (22) ou un poste de formage (22) placé en amont du robot (12) et destiné à former des creux et/ou des cuvettes (20) dans le film (10).
